(19) Europäisches Patentamt
European Patent Office
Office européen des brevets

(11) **EP 2 761 343 B1**

(12) **EUROPÄISCHE PATENTSCHRIFT**

(45) Veröffentlichungstag und Bekanntmachung des Hinweises auf die Patenterteilung:
**09.12.2015  Patentblatt 2015/50**

(21) Anmeldenummer: **12769641.7**

(22) Anmeldetag: **01.10.2012**

(51) Int Cl.:
*G02B 5/04* *(2006.01)*   *G02B 26/08* *(2006.01)*
*G01S 3/786* *(2006.01)*   *G01V 8/14* *(2006.01)*
*G08G 5/00* *(2006.01)*   *G01S 17/48* *(2006.01)*

(86) Internationale Anmeldenummer:
**PCT/EP2012/069354**

(87) Internationale Veröffentlichungsnummer:
**WO 2013/045699 (04.04.2013 Gazette 2013/14)**

(54) **NACHFÜHRVORRICHTUNG FÜR EINEN LICHTSTRAHL**

TRACKING DEVICE FOR A LIGHT BEAM

DISPOSITIF SUIVEUR POUR UN RAYON LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2011  DE 102011083848**

(43) Veröffentlichungstag der Anmeldung:
**06.08.2014  Patentblatt 2014/32**

(73) Patentinhaber: **Deutsches Zentrum für Luft- und Raumfahrt e.V.**
**51147 Köln (DE)**

(72) Erfinder:
• **GIGGENBACH, Dirk**
  **86932 Pürgen (DE)**
• **HORWATH, Joachim**
  **82205 Gilching (DE)**

(74) Vertreter: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
GB-A- 911 914      US-A- 2 998 529
US-A- 5 371 581    US-A1- 2004 212 865
US-A1- 2007 071 431   US-B1- 6 667 798

**Beschreibung**

Die Erfindung betrifft eine Nachführvorrichtung für einen Lichtstrahl mit Sender und/oder Empfänger. Eine solche Nachführvorrichtung wird zum Beispiel für die optische Freiraum-Datenkommunikation von einem Sender zu einem Empfänger, zwischen denen Sichtverbindung besteht, eingesetzt, wobei sich entweder der Sender oder der Empfänger oder beide bewegen und wobei entweder der Sender oder der Empfänger nahe der Nachführvorrichtung angeordnet ist oder eine wahlweise vom Sendebetrieb auf den Empfangsbetrieb und umgekehrt umschaltbare bzw. gleichzeitig sendende und empfangende Sende-/Empfangseinheit nahe der Nachführvorrichtung angeordnet ist.

Allgemein betrachtet ist eine Anwendung von Nachführvorrichtungen die Ausrichtung eines gebündelten Laserstrahls oder allgemein Strahlen elektromagnetischer Wellen im sichtbaren oder nicht sichtbaren Wellenlängenbereich (nachfolgend der Einfachheit halber Lichtstrahl genannt) auf ein Ziel, zu welchem eine Sichtverbindung besteht. Dies ist z. B. bei (mobilen, teilstationären, oder fixen) FSO -(Free Space Optics) Kommunikations-systemen erforderlich, aber auch bei Vermessungsaufgaben oder der Zielmarkierung. Diese Systeme teilen sich typischerweise auf in einen festen Teil für Strahlquelle, Abbildungsoptiken, Richtungssensor sowie Elektronik und in eine bewegliche Mechanik (rotierend und/oder kippend) mit Spiegeln und/oder transmissiven bzw. reflektiven Optiken, welche den Strahl in die gewünschte Richtung ablenken. Letzterer Teil wird CPA-Einheit (Coarse Pointing Assembly) genannt, die im Regelfall auch einen Sender oder einen Empfänger oder aber eine wahlweise vom Sendebetrieb auf den Empfangsbetrieb und umgekehrt umschaltbare bzw. gleichzeitig sendende und empfangende Sende-/Empfangseinheit aufweist. Unter CPA wird der Teil des Freiraum-Datenübertragungssystems einer optischen Nachführvorrichtung verstanden, welcher ein großes Sichtfeld ermöglicht (typisch hemisphärisch oder mit kegelförmigen Einschränkungen aufgrund von Singularität im Zenith). Zusätzlich zur CPA-Einheit kann es in einem Strahlausrichtesystem eine FPA (Fine Pointing Assembly) geben, welche eine präzise Strahlsteuerung auf wenige Bruchteile eines Grades ermöglicht. Mit "Azimut" ist die Sichtwinkelkoordinate orthogonal zur senkrechten Achse (das heißt der Seitenwinkel) gemeint, also ähnlich der Himmelsrichtung zum Horizont hin. Typischerweise sind 360° erforderlich, mit begrenztem oder unbegrenztem Stellbereich (letzterer bedeutet, dass unbegrenzt in einer Richtung weitergedreht werden kann). "Elevation" bezeichnet die Sichtwinkelkoordinate vom Horizont (Elevation = 0°) nach oben (positiver Elevationswinkel) oder unten (negativer Elevationswinkel), das heißt den Höhenwinkel. Der Elevationswinkelbereich kann maximal von -90° bis +90° betragen, allerdings kommt es durch das System und seinen Träger zu Sichtbereichs-einschränkungen, so dass ein typischer Bereich -30° bis +90° umfasst. Je nach Ausführung der CPA-Einheit kommt es auch im Bereich um +90° Elevation zu Bereichseinschränkungen, da entweder die CPA-Einheit. hier einen "blinden" Bereich hat oder die Singularität im Zenith bei dynamischen Anwendungen (Einsatz auf einem bewegten Fahrzeug) eine unendliche Winkelstellgeschwindigkeit um den Zenith erfordern würde.

Zu beachten ist, dass die CPA-Einheit je nach Anwendungsfall nach unten (z.B. wenn sie am Flugzeugrumpf montiert ist um einen Downlink zu einer Bodenstation zu ermöglichen), oder nach oben weist (wenn sie z. B. auf einem Fahrzeugdach montiert ist oder bei einer Bodenstation eingesetzt wird).

Es lassen sich hauptsächlich zwei Einsatzszenarien mit jeweils unterschiedlichen Bauformen unterscheiden:

A) Blick zum Horizont (Elevation +/- 30°), der Azimutbereich ist 360° mit möglichst "unlimited travel". Einsatz: auf einem Fahrzeug, welches sich in alle Himmelsrichtungen drehen kann, aber dessen Verkippung eingeschränkt ist (Bodenfahrzeug, Schiff, Flugzeug, Satellit), und welches sich vom Ziel (bzw. Kommunikationspartner) meist in so großem Abstand befindet, dass der Beobachtungswinkel flach ist.
B) Blick nach unten/oben oder in einen beschränkten Winkelbereich von einer schwebenden Plattform (Hubschrauber, Fesselballon) oder auch horizontal aber in einem kleinen Sichtkegel (z.B. Beobachtung oder Vermessung eines Areals von der Seite).

Für Szenario A) benötigt man einen Ablenkspiegel mit Rundumdrehung, um den Blick zum gesamten Horizont zu ermöglichen. Für Szenario B) dagegen reicht eine Objektivoptik ähnlich einem Weitwinkelobjektiv aus, welches typisch bis über 90° Sichtbereich bietet.

Problematisch wird es, wenn man mit der gleichen CPA-Einheit sowohl zum gesamten Horizont, aber auch nach unten/oben blicken muss. Dies kann z.B. bei einem Hubschrauber oder UAV (Unmanned Areal Vehicle) der Fall sein, welcher/welches einerseits weit entfernt von der Bodenstation, andererseits aber auch über der Bodenstation schweben kann, oder auch bei Blick von / zu einem LEO-(Low-Earth-Orbit-)Satelliten (optical Satellite-Ground Link) gegeben sein, der meist unter geringer Elevation nahe am Horizont zu sehen ist, aber auch im Zenith vorbeifliegen kann. In diesen Fällen müssen aufwendigere CPA-Bauformen eingesetzt werden, die im Stand der Technik unter den Bezeichnungen Turret-CPA (hier wird das ganze optische und elektronische System in die Strahlrichtung gedreht, das heißt keine Trennung von CPA vom Rest des Systems, diese Systeme werden typischerweise an Flugzeugen oder Hubschraubern befestigt und tragen optische Sensoren, aber eben auch FSO-Links), Periskop-CPA (mit zwei drehbaren Spiegeln) und Coude-CPA (erfordert vier Spiegel) bekannt sind.

Volumen, Gewicht und Kosten einer Mehrspiegel-CPA-Einheit (Periskop oder Coude) sind hoch, eine Turret-CPA-Einheit ist nochmals erheblich teurer. Bei Periskop- und Coude-CPA-Einheiten ergibt sich außerdem ein erheblicher zusätzlicher Aufwand durch die Kraftübertragung auf die Elevationsachse. Dies muss entweder durch elektrische Schleifringe geschehen, was teuer und empfindlich ist, oder durch komplexe Kraftübertragungsmechaniken.

Bezüglich des apparativen Aufbaus ist eine sogenannte Ein-Spiegel-CPA-Einheit vorteilhaft. Der Spiegel kann sowohl um die horizontale Achse gekippt werden, um den von unten aus dem Terminal kommenden Strahl in der Elevation abzulenken, als auch um die vertikale Azimut-Achse gedreht werden, um die Abstrahlrichtung im Azimut zu variieren. Um die Ein-Spiegel-CPA herum erstreckt sich ein schützender Glasdom, welcher bei der optischen Abbildung (je nach Dicke) ggf. auch berücksichtigt werden muss.

Eine Ein-Spiegel-CPA-Einheit erlaubt aber keinen Blick direkt zum Zenith/Nadir aufgrund der erforderlichen Verlängerung eines Spiegeldurchmessers. Diese Verlängerung beträgt bei 0° Elevation etwa $\sqrt{2}$ vom Strahldurchmesser; bereits bei 60° Blick nach oben muss der Spiegel aber 3,9 mal so lang wie breit sein. Damit beschränkt sich der Einsatz der einfachen Ein-Spiegel-CPAEinheiten auf Blickrichtungen zum Horizont (also unter kleinen Elevation).

Für die Astro-Navigation wird in GB-A-911914 eine Anordnung vorgeschlagen, bei der zur Beobachtung mehrerer Sterne mehrere schwenkbar um ein Prisma als Zentrum verfahrbare Teleskope eingesetzt werden, wobei das Prisma selbst kippbar ist. Je nach Ausrichtung des Prismas verlaufen die zu den Teleskopen führenden Lichtstrahlen entweder durch das Prisma (unter anderem unter interner Totalreflektion) hindurch oder aber sie werden an Außenflächen des Prismas reflektiert, um zu den Teleskopen zu gelangen.

Periskope mit kippbaren optischen Ablenkelementen in Form von Prismen oder Spiegeln sind in US-A-3 868 169 (DE-A-23 00 466) und US-A-5 134 519 (DE-, A-38 29 708) beschrieben.

Aus US-A-2 998 529 ist eine Nachführvorrichtung nach dem Oberbegriff des Anspruchs 1 bekannt.

Eine Aufgabe der Erfindung ist es, eine optische Nachführvorrichtung für die Übertragung eines (insbesondere modulierten Datenkommunikations-)Lichtstrahls anzugeben, die bei einer Rundumabdeckung sowie einer Abdeckung eines Elevationsbereichs von Minuswinkelwerten bis zum Zenith/Nadir hin eine einfache, robuste und störungsunanfällige Konstruktion aufweist.

Zur Lösung dieser Aufgabe wird mit der Erfindung eine Nachführvorrichtung für einen Lichtstrahl zwischen einem Sender und einem Empfänger bei Sichtverbindung zwischen diesen vorgeschlagen, wobei die Nachführvorrichtung versehen ist mit den Merkmalen des Anspruchs 1. Einzelne Ausgestaltungen der Erfindung sind Gegenstand der Unteransprüche.

Die erfindungsgemäße Nachführvorrichtung arbeitet wahlweise in einem von zwei Betriebsmodi. In dem ersten Betriebsmodus wird der Lichtstrahl zur Veränderung des Höhenwinkels mit Hilfe einer reflektiven Komponente abgelenkt, die eine Reflektionsfläche (beispielsweise eine Spiegelfläche) aufweist. Im zweiten Betriebsmodus ist eine transmissive (diffraktiv und ggf. auch reflektiv arbeitende) Komponente in den Lichtstrahls bzw. in die optische Achse eingebracht, um den Lichtstrahl in einem zweiten Höhenwinkelbereich abzulenken. Das optische Ablenkelement der erfindungsgemäßen Nachführvorrichtung, das die beiden zuvor genannten reflektive und transmissiven Komponenten umfasst, lässt sich um eine Kippachse kippen, die im wesentlichen rechtwinkelig zur optischen Achse der optischen Nachführeinheit verläuft. Die Azimut-Rundumabdeckung erfolgt durch entsprechende Rotation des optischen Ablenkelements um eine mit der optischen Drehachse nicht notwendigerweise zusammenfallenden Drehachse. Die Kipp- und die Drehachse brauchen sich nicht zu schneiden; der Abstand beider Achsen kann mit Veränderung des Kippwinkels variieren.

Die beiden reflektive und transmissiven Komponenten dienen, wie oben erwähnt, der Ablenkung des Lichtstrahls zur Realisierung unterschiedlicher Elevationswinkelbereiche. Diese beiden Elevationswinkelbereiche schließen aneinander an bzw. überlappen sich teilweise, so dass dann, wenn die Nachführung des Lichtstrahls innerhalb des Elevationswinkels-überlappungsbereich erfolgt, nicht zwischen den beiden Betriebsmodi hin bzw. her geschaltet werden muss, das optische Ablenkelement also nicht ständig soweit gekippt werden muss, dass einerseits die reflektive Komponente oder andererseits die transmissive Komponente in die optische Achse, dass heißt in den Lichtstrahl geschwenkt ist.

In weiterer vorteilhafter Ausgestaltung der Erfindung ist vorgesehen, dass die reflektive Komponente einen Reflektorkörper mit einer Spiegelfläche auf einer ersten Seite und eine dieser Spiegelfläche abgewandte zweite Seite aufweist und dass an der zweiten Seite die transmissive Komponente angeordnet ist.

Vorteilhafterweise ist die transmissive Komponente als optischer Prismenkörper mit einer Grundfläche und zwei von dieser aufragenden, gegeneinander geneigten, schrägen Seitenflächen ausgebildet. Hierbei kann die Grundfläche des Prismenkörpers z. B. auf der zweiten Seite des Reflektorkörpers angeordnet sein.

In weiterer vorteilhafter Ausgestaltung der Erfindung weist der Prismenkörper eine von außen verspiegelte Grundfläche auf, wobei die verspiegelte Grundfläche die Reflektionsfläche der reflektiven Komponente ist.

Der Prismenkörper kann z. B. einen dreieckigen oder trapezförmigen Querschnitt aufweisen, wobei die beiden schrägen Seitenflächen des Prismenkörpers rechtwinkelig zueinander verlaufen. Hierbei kann ferner mit Vorteil vorgesehen sein, dass die Kippachse innerhalb der reflektiven Komponente und/oder der transmissiven Komponente oder zwischen diesen oder innerhalb der Reflektionsfläche oder tangential zur Reflektionsfläche der reflektiven Komponente angeordnet ist.

Eine weitere vorteilhafte Ausgestaltung der Erfindung ist dadurch gekennzeichnet, dass die Kippachse in Abhängigkeit von der Größe des Kippwinkels, insbesondere innerhalb des ersten Kippwinkelbereichs, unter Beibehaltung ihrer Ausrichtung seitlich versetzbar ist. Zweckmäßigerweise grenzen beiden Kippwinkelbereiche aneinander an und/oder überlappen sich teilweise.

Das optische Ablenkelement kann z. B. innerhalb oder unterhalb eines transparenten Abdeckelements angeordnet sein, wobei Lichteintritts- und/oder Austrittsflächen der transmissiven Komponente des optischen Ablenkelements mit einer Antireflexionsbeschichtung versehen sein können.

Je nach Kippwinkel des Prismas kann der durch das Prisma zu leitende und ggf. abzulenkende Lichtstrahl senkrecht auf die Lichteinfallsfläche des Prismas auftreffen bzw. senkrecht aus der Lichtausfallsfläche des Prismas austreten. Dabei kommt es verständlicherweise unweigerlich zu Rückreflektionen in den Sender, was insbesondere bei den in der optischen Nachrichtentechnik verwendeten modulierten Lichtstrahlen bzw. Lichtbündeln von Nachteil ist. Daher wird bei einer vorteilhaften Weiterbildung der Erfindung vorgeschlagen, dass die transmissive Komponente des optischen Ablenkelements eine Lichteinfallsfläche und eine Lichtaustrittsfläche aufweist, die zur Minimierung der Auswirkungen von Rückreflektionen von auf die Lichteinfallsfläche auftreffender Strahlung und/oder von durch die Lichtaustrittsfläche austretender Strahlung zur Kippachse gegensinnig geneigt und jeweils in einem spitzen Winkel zur Kippachse verlaufen, wobei Reflektionsstrahlung zur Seite reflektiert wird. Durch das seitliche gegensinnige Kippen der Lichteinfalls- und Lichtaustrittsflächen wird zum Einen erreicht, dass die unvermeidlich entstehenden Reflektionen der reflektierten elektromagnetischen Wellen nicht in den Sender zurückgelangen, sondern zur Seite reflektiert werden, und zum Anderen wird durch die Gegensinnigkeit der Verkippung erreicht, dass es nur zu einem Parallelversatz des Strahls bezüglich der Apertur kommt, nicht aber zu einer Verkippung des Strahlenbündels in Kipprichtung der Flächen.

Diese Maßnahme kann selbstverständlich in Kombination mit einer Ausbildung der Lichteinfalls- und Lichtausfallsflächen, die zu einer verminderten Reflektion, und erhöhten Transmission führt, kombiniert werden. Derartige Maßnahmen sind beispielsweise in Form von Antireflektionsbeschichtungen bei Prismen grundsätzlich bekannt.

Die Verringerung bzw. das Ausblenden von Rückreflektionen auf der Lichteinfallsseite bzw. an der Lichteinfallsseite könnte beispielsweise auch dadurch erzielt werden, dass die Ausbreitungsrichtung des Lichtstrahls mit der Achse, die parallel zur Grundfläche und durch die beiden Ebenen, in denen die beiden ersten Seitenflächen des Prismas angeordnet sind, verläuft, einen vom rechten Winkel abweichenden Winkel bildet. Mit anderen Worten könnte man also das Prisma insgesamt gegenüber der Lichtstrahleinfallsachse verkippen. Dann aber würde man an der Lichtaustrittsfläche keine Kompensation mehr für die seitliche Ablenkung des Lichtstrahl erzielen können, es sei denn, dass die Lichtaustrittsfläche gegensinnig zum Neigungswinkel zwischen Lichtstrahl und Lichteinfallsfläche verkippt ist. Eine Nachführvorrichtung mit Prismenausgestaltung und Relativanordnung zur Richtung des eintreffenden Lichtstrahls, bei denen es nicht zu einem Parallelversatz kommt, ist im Rahmen dieser Erfindung ebenfalls abgedeckt.

Der seitliche Neigungswinkel der oben genannten besagten Flächen des Prismas kann je nach tolerierter Gesamtgröße des Prismas grundsätzlich jeden denkbaren Wert einnehmen, so dass der Neigungswinkel ein spitzer Winkel ist. Je größer der Neigungswinkel allerdings ist, desto breiter muss das Prisma werden, um in Bezug zur Lichtstrahl-Apertur kein Licht zu verlieren. Bezüglich einer Miniaturisierung des Prismas und seiner geometrischen Abmessungen und damit bezüglich einer leichtgewichtigen und kleinformatigen Ausgestaltung des Prismas ist es von Vorteil, wenn der Winkel lediglich einige wenige Grad beträgt. Hier sind Neigungswinkel von beispielsweise 1/10 Winkelgrad bis einigen wenigen zig Winkelgeraden, vornehmlich 0,2 Winkelgrad bis 15 Winkelgrad und insbesondere 0,2 Winkelgrad bis 5 Winkelgrad bzw. 10 Winkelgrad möglich.

Die Erfindung wird nachfolgend anhand eines Ausführungsbeispiels und unter Bezugnahme auf die Zeichnung näher erläutert. Im Einzelnen zeigen dabei:

Fign. 1 und 2      schematische Darstellungen zur Verdeutlichung der Problematik der Verwendung einer Ein-Spiegel-CPA-Einheit und der abbildbaren Strahldurchmesser im Zusammenhang mit der zur Zentih-Bereichsüberstreichung erforderlichen extremen Verlängerung der Spiegellänge,

Fig. 3      eine graphische Darstellung eines Dove-Prismas, das erfindungsgemäß als transmissive Komponente des optischen Ablenkelements einsetzbar ist,

Fign. 4 bis 6      verschiedene Kipppositionen des DOVE-Prisma zur Überdeckung eines Ablenkwinkelbereiches (Elevation-Winkelbereichs) von +90° (Fig.4) bis +30° (Fig. 6),

Fign. 7 bis 9      die mögliche Veränderung der Position der Kippachse in Abhängigkeit von dem Grad der Kippbewegung des Prismas,

Fign. 10 und 11      Prinzipskizzen der optischen Nachführeinheit bei Betrieb in einem der beiden Modi (Reflektions-(Spiegel-)Modus gemäß Fig. 10 und Transmissions-(Prisma-)Modus gemäß Fig. 11),

Fign. 12 bis 14      eine bezüglich der innerhalb des Kippwinkelbereichs eines Prismas jeweils erfassbaren lichtstrahlquerschnittsoptimierte Anordnung von Prisma, Sender/Empfänger und Kippachsenlage, wobei das Prisma in der Seitenansicht ein gleichschenkliges rechtwinkliges Dreieck darstellt,

Fign. 15 und 16      eine bezüglich der innerhalb des Kippwinkelbereichs eines Prismas jeweils erfassbaren lichtstrahlquerschnittsoptimierte Anordnung von Prisma, Sender/Empfänger und Kippachsenlage, wobei das Prisma in der Seitenansicht ein unregelmäßiges, nicht rechtwinkliges Dreieck bildet und

Fign. 17 bis 20      Darstellungen eines bezüglich der Minimierung von Störungen durch Rückreflektionen optimiertes Prisma.

Bei dem hier zu beschreibenden Ausführungsbeispiel handelt es sich um eine Nachführvorrichtung mit einer optischen Nachführeinheit 10, die zum Aussenden eines ablenkbaren Lichtstrahls bzw. zum Empfangen eines ablenkbaren Lichtstrahls vorgesehen ist. Die optische Nachführeinheit 10 definiert konstruktionsbedingt eine optische Achse 12 und weist ein Gehäuse 14 auf. Das Gehäuse 14 trägt ein optisches Ablenkelement mit einer reflektive Komponente 18 und einer transmissiven Komponente 20. In diesem Ausführungsbeispiel reduziert sich die reflektive Komponente 18 auf eine Reflektionsfläche 21, während als transmissive Komponente 20 ein Prismenkörper 22 eingesetzt wird, der eine Grundfläche 24, die in diesem Ausführungsbeispiel mit der Reflektionsfläche 21 zusammenfällt und zwei schräg verlaufenden, von der Grundfläche 24 aufragende und gegeneinander geneigte schräge Seitenflächen 26,27 aufweist. Dieses optische Ablenkelement ist um eine Kippachse 28 kippbar sowie um die optische Achse 12 drehbar (siehe Drehachse 30). Beide Achsen (Drehachse 30 und Kippachse 28) stehen senkrecht zueinander. Die Kippachse 28 kann in Abhängigkeit von der Größe des Kippwinkels seitlich gegenüber der optischen Achse 12 und/oder der Drehachse 30 verschoben werden.

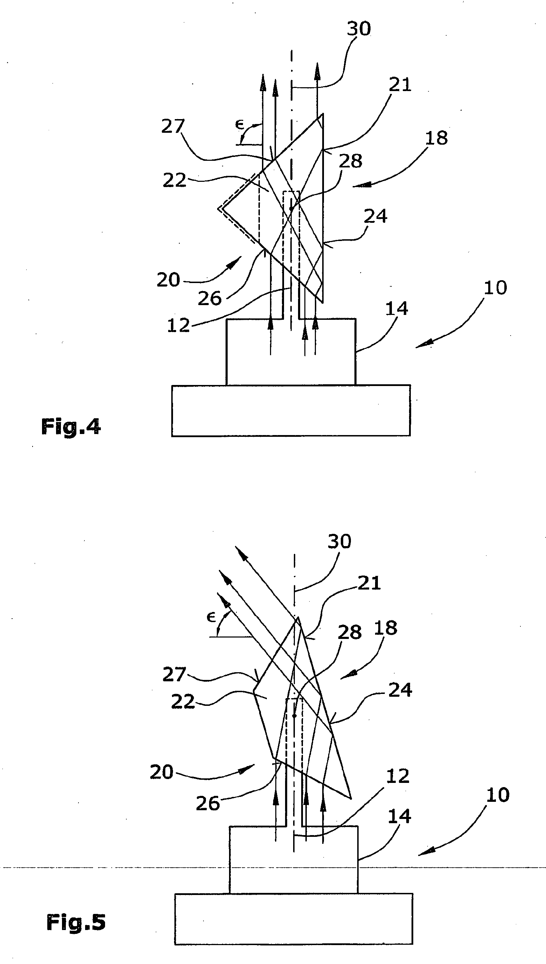

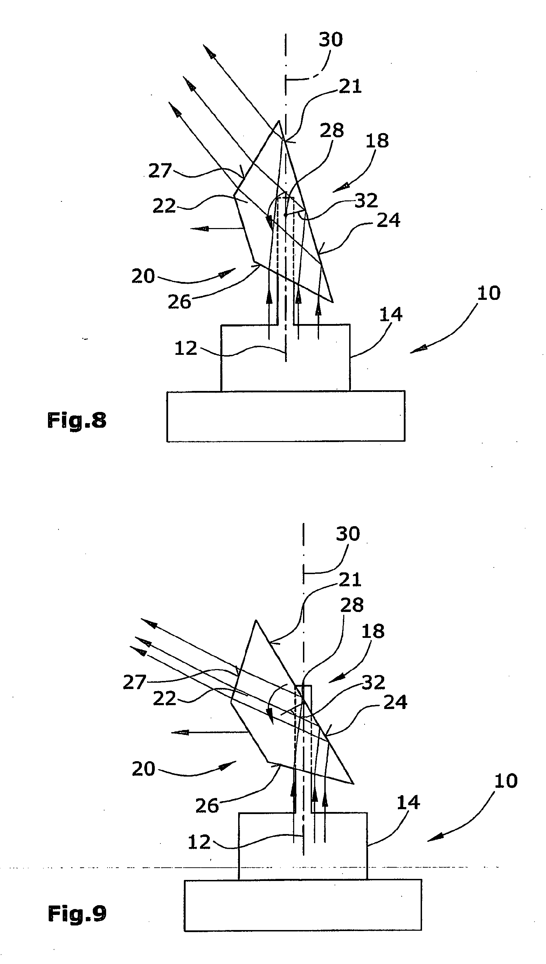

Der zuvor beschriebene Aufbau der Nachführvorrichtung ist beispielsweise in den Fign. 4 bis 11 gezeigt.

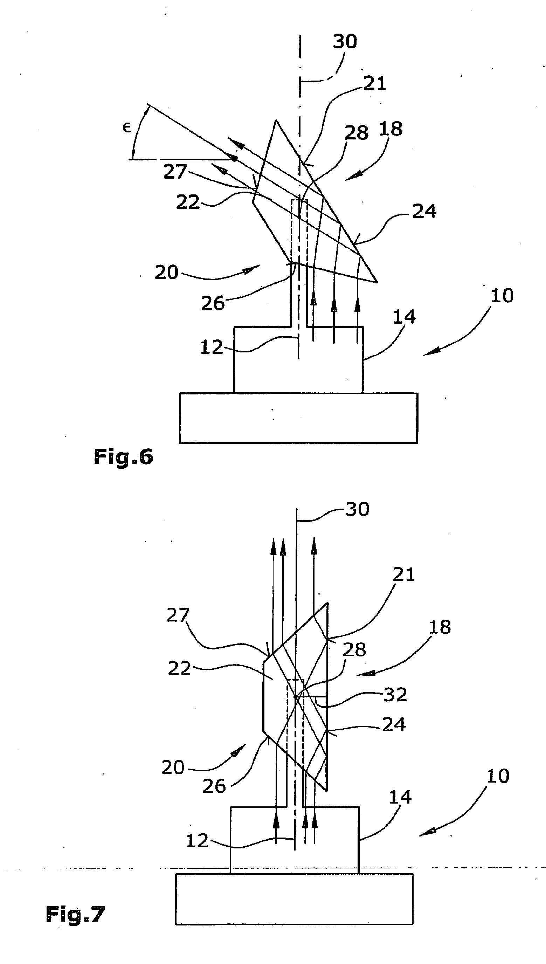

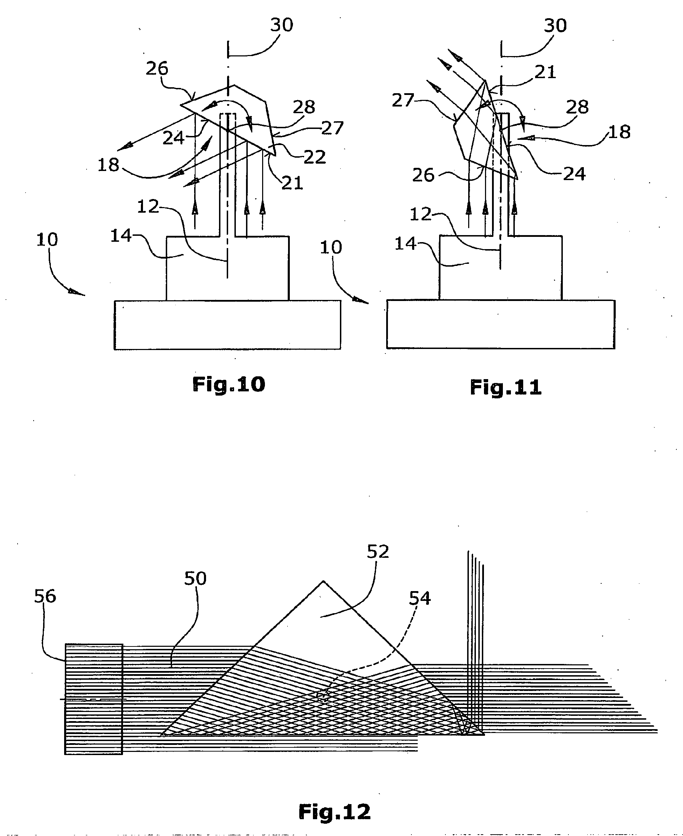

Bei dem erfindungsgemäßen Ansatz übernimmt die Reflektionsfläche 21 die Funktion eines Ablenkspiegels, durch den ein Elevations-Ablenkwinkelbereich von beispielsweise -45° Strahlelevation bis +45° Strahlelevation erzielt werden kann. Für größere Elevations-Ablenkwinkelbereiche wird auf den Prismenablenk-Mechanismus der erfindungsgemäßen Nachführvorrichtung umgeschaltet und zwar durch Fortsetzen der Verkippung des optischen Ablenkelements 16 (siehe die Fign. 10 und 11). Die Prismenablenkung überdeckt einen Ablenkwinkelbereich von ca. +30° Elevation bis +90° Elevation (also senkrecht nach oben, wie es beispielsweise in den Fign. 4 und 7 gezeigt ist). Die beiden Ablenkwinkelbereiche, in denen die Spiegelablenkung einerseits und die Prismenablenkung andererseits wirksam sind, überschneiden sich, um bei Elevationen im Übergabebereich (Überschneidungsbereich) ein ständiges Umschalten zwischen den zwei Modi zu vermeiden. Als Prisma 22 wird beispielsweise ein Dove-Prisma verwendet, welches aus zwei orthogonalen Katheten (Seitenflächen 26, 27) und einer verspiegelten Hypotenuse (Grundfläche 24) besteht, wobei die Spitze des Dreiecks abgeschnitten sein kann, um Baulänge und Gewicht zu sparen. Die verspiegelte Hypotenusenfläche bildet vorzugsweise gleichzeitig die Spiegelfläche des reflektiven Ablenkspiegels (reflektive Komponente 18).

Ausgangspunkt für die erfindungsgemäße Nachführvorrichtung ist zunächst der durch die reflektive Komponente 18 gebildete Ablenkspiegel. Der mathematische Zusammenhang zwischen dem Strahlenelevationswinkel $\varepsilon$ in Abhängigkeit vom Spiegel-Anstellwinkel $\alpha$ ist

$$\alpha : \varepsilon = (\alpha - 45°) * 2.$$

Um einen Strahlendurchmesser D unbeschnitten ablenken zu können, erfordert der Ablenkspiegel eine große Spiegelachse M in Abhängigkeit von der Strahlelevation $\varepsilon$ nach folgender Gesetzmäßigkeit

$$M = D / \cos(\alpha) = D / \cos(\varepsilon/2 + 45°).$$

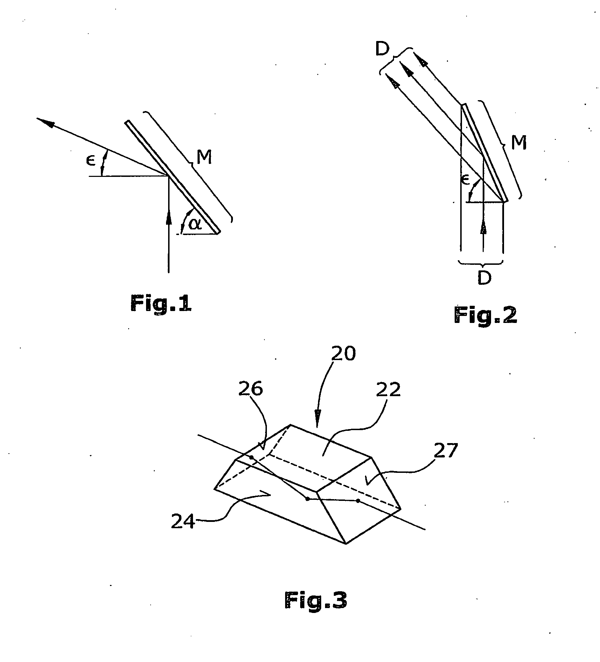

Diese Situation ist in den Fign. 1 und 2 gezeigt. Große Elevationswinkel $\varepsilon$ (das heißt sehr flache Auftreffwinkel $\alpha$) erfordern eine extreme Verlängerung der Spiegellänge M.

Mit einem Ablenkspiegel lässt sich also der Lichtstrahl nur bis zu einem gewissen maximalen positiven Elevationswinkel z. B. im Bereich zwischen 30° und 50° ablenken, wenn man keine allzu großen Spiegellängen M zulässt.

Fig. 3 zeigt eine Darstellung eines Dove-Prisma 22. Die (Ein- und Austritts -) Seitenflächen 26, 27 stehen zueinander etwa im 90°-Winkel, wobei dieser Winkel zur Optimierung variiert werden kann. Wichtig ist, dass die Winkel zwischen den optisch brechenden Seitenflächen 26, 27 und der reflektierenden Grundfläche 24 gleich sind. Der Strahl wird nicht nur an beiden Durchtritts-bzw. Seitenflächen 26, 27 gebrochen, sondern auch an der langen gestreckten Grundfläche 24 reflektiert, womit eine Strahlablenkung ähnlich einer Reflektion eintritt, aber ohne die extreme Verlängerung der Spiegellänge wie bei dem Ablenkspiegel.

Die Fign. 4 bis 6 zeigen die Strahlengänge durch das Dove-Prisma 22 in unterschiedlichen Kippwinkelstellungen zur Abdeckung eines Elevationswinkelbereichs von etwas + 30° bis + 90°. Das Dove-Prisma 22 ist in Fig. 4 vollständig, also mit der Dreiecksspitze gezeigt. Ohne diese Dreiecksspitze (siehe Erläuterung weiter oben) ergibt sich ein trapezförmiger Querschnitt des Dove-Prismas. In Fig. 4 ist ein Elevationswinkel des Lichtstrahls von +90° gezeigt, während in Fig. 6 ein Elevationswinkel von +30° dargestellt ist. Fig. 5 zeigt die Kippstellung des Dove-Prismas 22 für einen Elevationswinkel, der zwischen den beiden zuvor genannten Elevationswinkeln liegt.

Prismen mit strahlbrechenden Flächen bewirken normalerweise eine Zerlegung des Lichts in seine Spektralfarben (chromatische Ablenkung). Dies ist bei der erfindungsgemäßen Anwendung von geringerer Bedeutung, da ein monochromatischer Laserstrahl (das heißt lediglich eine enge Spektrallinie) zum Einsatz kommt. Selbst wenn der Laser ein breites Spektrum aufweist, bewirkt der zum Eintrittswinkel gleiche Austrittswinkel (zumindest beim gleichschenkligen Dove-Prisma) die Korrektur der Ablenkungswinkel der spektralen Zerlegung, womit selbst bei polychromatischer Lichtquelle wohl nur ein kleiner seitlicher Versatz übrig bleiben würde.

Die Fig. 7 bis 9 verdeutlichen die veränderliche Strahl-Drehachse 32 im Prismamodus und die ggf. veränderliche effektive Strahlapertur. Je nach der Position der mechanischen Drehachse und Größe des Prismas relativ zum Strahldurchmesser kommt es zu Strahlbeschneidungen, die entweder akzeptiert werden können, da bei hohen Elevationen die Distanz zum Partner geringer ist und damit weniger Sendeleistung erforderlich ist, oder durch Optimieren der Geometrie vermieden werden können. Die Drehachse 32 des Strahls wiederum ist nicht mit der mechanischen Prisma-Kippachse 28 identisch sondern wandert zu geringeren Elevationen zur Spiegelebene (Reflektionsfläche 21) hin (wie in den Fig. 7 bis 9 bei 32 gezeigt). Beides kann zueinander optimiert werden, um eine maximale effektive Strahlapertur bei möglichst geringem Strahlversatz über den erforderlichen Elevationsbereich zu garantieren. Ebenso kann eine Mechanik für die Elevationsverkippung verwendet werden, welche die Position der mechanischen Kippachse den Erfordernissen entsprechend nachführt.

Schließlich zeigen die Fign. 10 und 11 zwei Prinzipskizzen der erfindungsgemäßen Nachführvorrichtung in deren beiden Betriebsmodi. Die Kippachse 28 ist fix und die Prismenform ist noch nicht optimiert, so dass es gemäß Fig. 11 bei Elevationswinkeln nahe 90° zur Strahlbeschneidungen kommt.

Anhand der Ausführungsbeispiele der Fign. 12 bis 14 sowie der Fign. 15 und 16 soll nachfolgend noch auf Besonderheiten bei dem Design des Prismas und dessen Größe eingegangen werden.

Die Größe des Prismas und insbesondere seine Breite sind bestimmt durch das Ziel, beim Blickwinkel NADIR (und entgegengesetzt dazu) möglichst den gesamten Querschnitt des Lichtstrahls zu erfassen und führen zu können. Zweckmäßig ist es also, wenn das Prisma eine Breite aufweist, die gleich der Breite der Apertur ist. Allerdings lässt sich damit immer noch nicht der gesamte Lichtstrahl erfassen, es sei denn, dass man die Höhe des Prismas entsprechend wählt, was allerdings zu großformatigen Prismen und damit vergleichsweise hohen Gewichten führt. Von Vorteil ist es daher, in Blickrichtung NADIR eine Lichtabschattung beidseitig des optischen Strahlengangs und symmetrisch zur Strahlachse zu tolerieren. Dies führt zu einem geringen Formfaktor und zu einem Volumen des sich in Azimut und Elevation drehenden Prismas (insbesondere vorteilhaft in Anwendung bei CPA), das vergleichsweise klein ist. Realisiert werden kann dies, wie anhand der Fign. 12 bis 14 gezeigt, beispielsweise durch ein Prisma mit gleichseitigem, rechtwinkligem Dreieck in der Seitenansicht. Fig. 12 zeigt, dass nun in Blickrichtung NADIR der Lichtstrahl 50 durch das Prisma 52 symmetrisch beschnitten ist. Die Kippachse des Prismas 52 ist in Fig. 12 bei 54 gezeigt und der Sender bei 56.

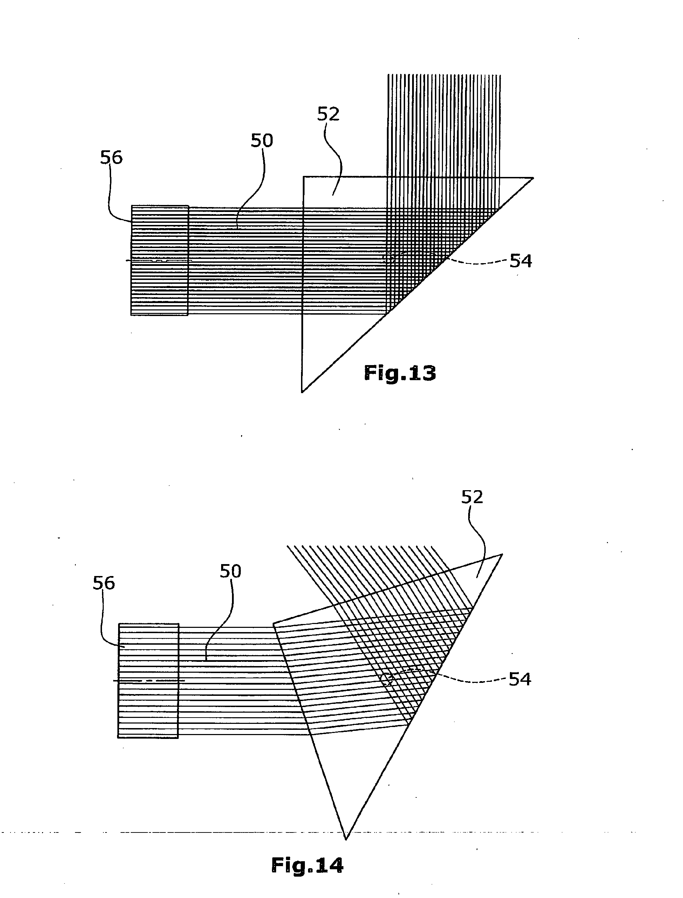

Fign. 13 und 14 zeigen die Vorzüge der Anordnung gemäß Fig. 12, indem nämlich über einen maximalen Ablenkwinkelbereich von 0 bis 54 bzw. 36 Winkelgrad nach oben der gesamte Lichtstrahl 50 durch das Prisma erfasst und abgelenkt werden kann.

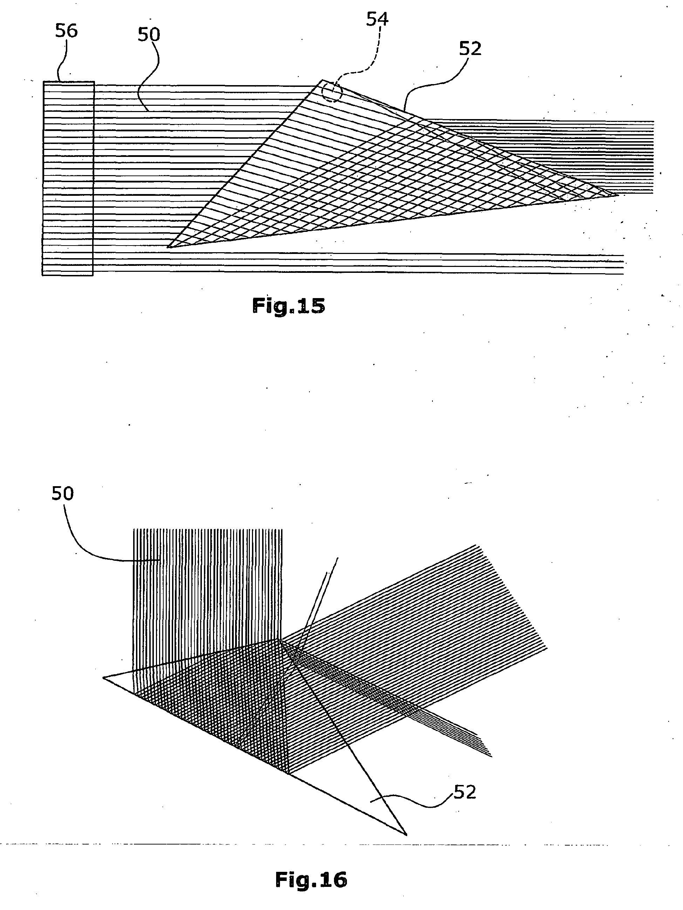

Eine bezüglich der obigen Eigenschaften in ähnlicher Weise optimierte Gesamtanordnung zeigen Fign. 15 und 16. Hier sind die gleichen Bezugszeichen verwendet worden wie in den Fign. 12 bis 14. Das Prisma ist nun in der Seitenansicht betrachtet nicht mehr in der Form eines gleichseitigen rechtwinkligen Dreiecks ausgestaltet, sondern als unregelmäßiges Dreieck; die Kippachse 54 ist im Bereich der der längsten Seite des Dreiecks gegenüberliegenden Ecke verlagert.

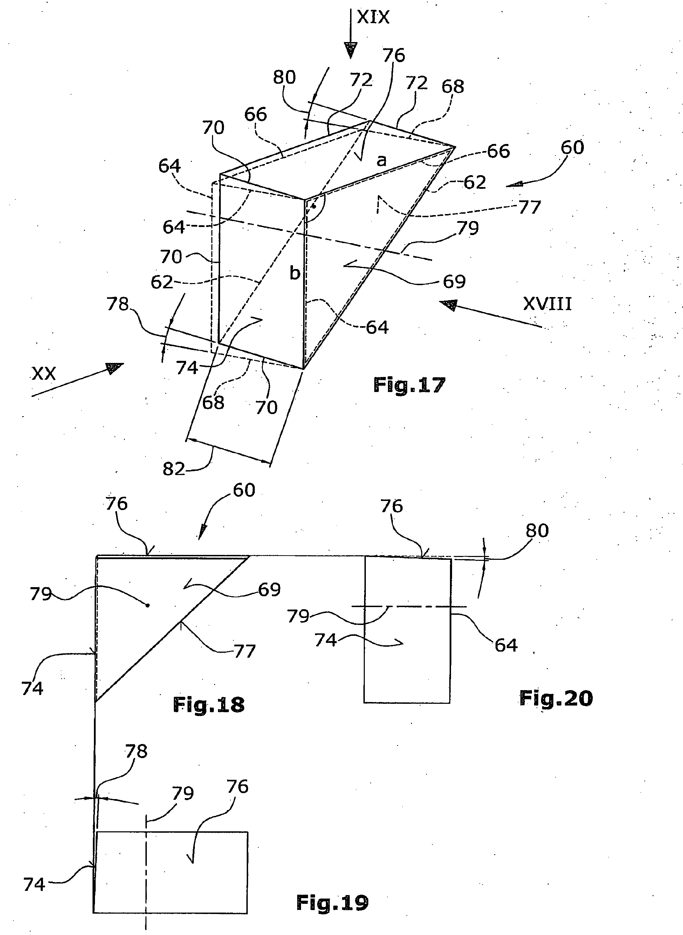

In den Fig. 17 bis 20 ist eine weitere besondere Prismenausgestaltung gezeigt. Dabei zeigt Fig. 17 das Prisma 60 dieser Ausgestaltung in der Perspektive. Dabei ist mit den paarweise bzw. gruppenweise parallelverlaufenden gestrichelten Kanten 62,64,66 und 68 ein regelmäßiger Prismenkörper mit dreieckigen Seitenflächen 69 gezeigt (in diesem Ausführungsbeispiel ist der Sonderfall eines gleichschenkligen, rechtwinkligen Dreiecks dargestellt). Mit den durchgezogenen Linien 70 und 72 sind diejenigen Kantenverläufe angedeutet, die die Lichteinfallsfläche 74 und die Lichtaustrittsfläche 76 begrenzen (neben den bei 66 und 64 durchgezogen dargestellten Begrenzungskanten). Diese beiden Flächen 74,76 ragen von der Grundfläche 77 des Prismas 60 auf, die in der erfindungsgemäßen Anwendung in einem CPA reflektiv angeordnet ist und die reflektive Komponente des Ablenkelements bildet, dessen transmissive Komponente das Prisma 60 ist. Zu erkennen ist, dass die Lichteinfallsfläche 74 um einen Neigungswinkel 78 relativ zur Achse 79 geneigt ist, während die Lichtaustrittsfläche 76 um den betragsmäßig gleichen Winkel 80 geneigt ist, jedoch gegensinnig zur Neigung der Lichteinfallsfläche 74. Dies ist auch in den Seitenansichten der Fign. 18 bis 20 gezeigt. Der Neigungswinkel beider Flächen 74,76 beträgt in diesem Ausführungsbeispiel zwei Winkelgrad, kann aber auch größer sein, wobei dann allerdings die Breite 82 des Prismas 60 vergrößert werden müsste, um den Lichtstrahl über seine gesamte Apertur noch führen und erfassen zu können.

Die gegenseitige Neigung der Lichteinfalls- und Lichtaustrittsflächen 74,76 begünstigt eine Minimierung der Störungen durch Rückreflektionen, wie sie insbesondere unter solchen Kippwinkeln des Prismas 60 auftreten, bei denen der Lichtstrahl senkrecht auf mindestens eine der beiden Flächen auftrifft. Derartige Kipppositionen bzw. Anordnungen sind beispielhaft in den Fign. 13 und 16 gezeigt. Die an den wie Spiegelflächen wirkenden Lichteinfalls- bzw. Lichtaustrittsflächen 74,76 entstehenden Reflektionen sind zur Seite abgelenkt, gelangen also nicht wieder zurück zum Sender bzw. verlaufen also spitzwinklig zu der Richtung, aus der die auftreffenden Strahlen kommen. Somit können die reflektierten Strahlen durch optische Elemente wie beispielsweise Blenden oder dergleichen ausgeblendet werden. Eine Prismenanordnung, wie sie in den Fign. 17 bis 20 gezeigt ist, lässt sich auch in anderen Anwendungsfällen als dem hier beschriebenen Anwendungsfall einer CPA einsetzen.

Vorteile des Designs der erfindungsgemäßen Nachführvorrichtung (Prisma-Siegel-CPA-Einheit) lassen sich wie folgt angeben:

- Ein Vorteil gegenüber einer einfachen Ein-Spiegel-Ablenkeinheit besteht darin, dass der Bereich hoher Elevationswinkel auch bedient werden kann, während eine Ein-Spiegel-CPA für hohe Elevationswinkel eine extreme Verlängerung des Spiegeldurchmessers in Elevationsrichtung erfordern würde, und zwar nach der Formel $M = D / \cos(\varepsilon/2 + 45°)$, ($M$: erforderliche Elevationsachsen-Länge des Spiegels, $D$: effektiver Strahldurchmesser). Zum Erreichen von 90° Elevation wäre ein unendlich langer Spiegel erforderlich. Die Nachteile eines langen Spiegels wären unakzeptable Größe und Gewicht. Die Lösung nach dem Erfindungsgedanken benötigt dagegen für Elevationswinkel nahe 90° nur eine spiegelnde Fläche von ca. $D\cdot\sqrt{2}$ im Dove-Prisma (exakt hängt dies von Prismenwinkeln und Strahleintrittshöhe ab), da die brechenden Prismenflächen die Strahlen steiler auf die im Inneren des Prismas angeordnete reflektierende Fläche lenken. Ebenfalls von Vorteil ist, wenn die spiegelnde Fläche des Prismas gleichzeitig die äußere Spiegelfläche für die Elevationen um 0° ist, und somit kein zusätzlicher Komponentenaufwand entsteht.

- Je nach den Randbedingungen ist das Volumen des Prismas zu begrenzen, womit der Strahl ggf. seitlich beschnitten wird und die effektive Strahlfläche damit reduziert wird. Diese Reduzierung der effektiven Apertur und die zusätzlichen optischen Verluste an den brechenden Ein- und Austrittsflächen (Reflektionsverluste) sind szenariobedingt meist kein Problem. Da die Entfernung zum Partner bei hohen Elevationen fast immer sehr viel geringer ist als beim Blick zum Horizont, kann der kleine Verlust an Strahlleistung durch die seitliche Beschneidung fast immer akzeptiert werden, während bei Blickrichtung zum weit entfernten Partner am Horizont möglichst viel vom Signal ankommen muss. Dies wird durch die dann verwendete optimal reflektierende Spiegelfläche sichergestellt.

- Mit der Nachführvorrichtung nach dem Erfindungsgedanken werden also die beiden Strahlablenkungsprinzipien für niedrige- und hohe Elevationen in vorteilhafter Weise miteinander kombiniert.

- Die Auslegung des Prismas kann in mehreren Parametern an die Bedürfnisse der jeweiligen Applikation angepasst werden. Der Winkel der brechenden Flächen muss nicht notwendigerweise 90° betragen, sondern kann dem abzudeckenden Elevationswinkelbereich angepasst werden. Damit kann - zusammen mit der Position der Kippachse - auch die effektive Apertur des Prismas für den Lichtstrahl und das Volumen (und damit das Gewicht) der Prisma-Spieget-Nachführvorrichtung optimiert werden. Um möglichst wenig Reflexionsverluste und Streulicht zu verursachen, können die brechendenden Prismenflächen mit einer AntireflexBeschichtung versehen sein, die auf den hauptsächlichen Auftreffwinkel angepasst sein sollte.

- Die Kraftübertragung auf die Elevationsachse kann ebenfalls sehr vorteilhaft ohne elektrische Schleifringe oder Kraftumlenkung erfolgen. Da Azimut- und Elevations-Ablenkungen mit nur einem optischen Ablenkelement erfolgen und dieses axial auf der Azimutdrehachse sitzt, kann die Ansteuerung der Spiegelverkippung durch ein einfaches zylindrische Gleit- oder Kugellager geschehen. Beispielsweise drückt dazu ein Servohebel von unten einen Zylinder durch die offene Azimutdrehachse, auf diesem starren Zylinder liegt wiederum ein ebenso großer, sich aber mit dem Azimut mitdrehender Zylinder auf, welcher die transversale Verschiebung des Servohebels aufnimmt und auf den Spiegel als Elevationsverkippung überträgt.

- Die Drehachse im Spiegel-Modus sollte auf der Spiegelfläche liegen, damit ist gewährleistet, dass der Strahl immer zentrisch aus der Nachführvorrichtung abgestrahlt wird. Dies ist von Vorteil, wenn die Nachführvorrichtung von einem schützenden Glasdom umgeben ist. Da dieser Glasdom wiederum eine brechende Wirkung hat, muss dieser im gesamtem optischen Strahlengang berücksichtigt werden. Ist der Strahl immer in der Mitte des Doms positioniert, so ist die optische Wirkung des Doms richtungsunabhängig. Andernfalls ist die Wirkung des Doms von der Strahlrichtung abhängig und es kommt evtl. zu Abbildungsfehlern (deren Auswirkung wiederum vom Gesamtsystem abhängig ist).Die Drehachse für das Prisma sollte wiederum leicht veränderlich sein, und deren optimale Position kann auch mit Hilfe der Prismenwinkel optimiert werden.

- Wie in den Fig. 7 bis 12 erkennbar, wäre eine variable Elevationskippachse von Vorteil, um sowohl im Spiegel- wie auch im Prisma-Modus immer den vollen Strahldurchmesser unbeschnitten abbilden zu können. Solche Mechaniken sind gut realisierbar, allerdings ist es evtl. aus Kostengründen wünschenswert, nur einen festen Elevationsdrehpunkt zu verwenden. Da man - wie oben schon beschrieben - bei hohen Elevationswinkeln gewisse Strahlverluste in Kauf nehmen kann, ist dies daher eine meist akzeptable und kostengünstige Realisierungsoption. Mechanischer Drehpunkt und Prismawinkel sind hierzu zu optimieren, auch unter dem Aspekt, dass die spiegelnde Fläche im Spiegel-Modus optimal genutzt wird.

- Ein Vorteil der Erfindung gegenüber einer Mehrspiegel-CPA-Einheit (wie z. B. ein Periskop oder eine Coude-CPA) besteht in der wesentlich kleineren Bauform und damit auch der Vermeidung von langen mechanischen Hebeln, welche zu Instabilitäten der Konstruktion führen. Ebenso ist die Realisierung einer Nachführvorrichtung nach der Erfindung erheblich kostengünstiger möglich.

- Gegenüber einer Turret-CPA ist die hier beschriebene erfindungsgemäße Ausführung erheblich kleiner und um Größenordnungen günstiger herzustellen. Sie ermöglicht damit den Einsatz von Strahlausrichte- bzw. Nachführsystemen in Anwendungsgebieten, in denen der Einsatz einer Turret-CPA allein wegen Größe und Gewicht nicht möglich ist. Z.B. könnten Spiegel-Prisma-CPAs auch auf kleinen UAVs (Minidrohnen) Einsatz finden, welche ein Gebiet von der Luft aus mit einem hochauflösenden Lichtstrahl beobachten und dabei erhebliche Datenmengen generieren, welche zum Boden übertragen werden müssen.

- Bezüglich des Platzbedarfs und des Gewichts sowie der Trägheitsmassenverteilung optimal ist es, wenn das Prisma möglichst kleinformatig mit möglichst im Zentrum des Prismas angeordneter Achse ausgebildet ist. Dabei sollte die Breite des Prismas der Bereite der Apertur, d. h. der Breite des Lichtstrahls bzw. des Lichtstrahlbündels bzw. des Strahlengangs entsprechen. Die Kippachse sollte so gelegt werden, dass in Blickrichtung NADIR (bzw. entgegengesetzt dazu) der gesamte Strahlengang der Apertur geführt wird oder aber der Strahlengang symmetrisch beschnitten wird (siehe beispielsweise Fig. 12 bis 14 sowie 15 und 16).

- Dem Prisma kann ein optisches System (beispielsweise Blenden oder lichtbrechende optische Elemente) nachgeschaltet sein.

- Der Minimierung von Störungen in Folge von Rückreflektionen dient eine gegenseitige Verkippung bzw. Seitenneigung der Lichtstrahleintritts- und Lichtstrahlaustrittsflächen des Prismas gegen die Strahlausbreitungsrichtung (siehe Fign. 17 bis 20). Hierdurch vergrößert sich die notwendige Breite des Prismas, um den Lichtstrahl durch das Prisma führen und ablenken zu können. Hierzu sei grundsätzlich angemerkt, dass der aus der Apertur austretende Sendelichtstrahl hoher Energie an der nicht idealen Antireflexbeschichtung eines Prismas zu Rückreflektionen in das optische System, d. h. in den Sender führen kann. Dies ist gerade bei modulierten Sendelichtstrahlen von Nachteil. Durch die gegenseitige Verkippung (gegensinnige und gleiche seitliche Neigung) der Lichteinfalls- und Lichtausfallsflächen des Prismas gelangen reflektierte Strahlen nicht mehr direkt zurück in das optische System, sondern werden seitlich davon reflektiert, wo sie abgefangen werden können (beispielsweise durch Blenden oder andere optische Elemente). Somit werden also diese reflektierten Strahlanteile sozusagen aus dem optischen System extrahiert.

Mögliche Gebiete gewerblicher Anwendungen sind:

- Höchstratige atmosphärische freiraumoptische Kommunikations-systeme, z. B. Flugzeug-Boden, Flugzeug-Flugzeug, Schiff-Schiff, Fahrzeug-Boden, Fahrzeug-Fahrzeug, UAV-Boden, UAV-UAV, High altitude Plattform (HAP)-HAP, ...,
- Optische Satellitendownlinks,
- Optische Übertragung von Frequenznormalen ("Synchronisation optischer Uhren"),
- Freiraum-Quantelinkübertragung,
- Laservermessung (3D-Scanner),
- Kameras (Beobachtungs- und/oder Versorgungs)-Kameras.

EP 2 761 343 B1

Die Erfindung wurde vorstehend für den Fall beschrieben, dass die optische Nachführvorrichtung einen ausgesendeten Lichtstrahl insoweit nachführt, als er von dem sich relativ zur Nachführvorrichtung bewegenden Empfänger empfangen wird. Selbstverständlich lässt sich die erfindungsgemäße Nachführvorrichtung auch für den umgekehrten Fall einsetzen, dass nämlich die Nachführvorrichtung einen Lichtstrahl, der von einem sich relativ zur Nachführvorrichtung bewegenden Sender ausgesendet.wird, empfängt.

**Patentansprüche**

1.  Nachführvorrichtung für einen modulierten Datenkommunikationslichtstrahl, mit

    - einem Sender zum Aussenden eines Lichtstrahls und einem Empfänger zum Empfangen eines Lichtstrahls oder einer wahlweise umschaltbaren bzw. gleichzeitig sendenden und empfangenden Sender-/Empfängereinheit und

    - einer optischen Nachführeinheit, die eine von dem Sender ausgehende oder eine zum Empfänger führende optische Achse (12) definiert und ein längs dieser angeordnetes optisches Ablenkelement aufweist, welches zur Veränderung des Höhenwinkels, unter dem der Lichtstrahl einfällt oder austritt, um eine senkrecht zur optischen Achse (12) verlaufende Kippachse (28) relativ zum Sender und/oder Empfänger und/oder zur Sender-/Empfängereinheit kippbar ist und welches zur Veränderung des Seitenwinkels, unter dem der Lichtstrahl einfällt oder austritt, um eine zur optischen Achse (12) parallele Drehachse (30) entweder zusammen mit dem Sender und/oder dem Empfänger und/oder der Sender-/Empfängereinheit oder relativ zum Sender und/oder Empfänger und/oder zur Sender-/Empfängereinheit drehbar ist,
    **dadurch gekennzeichnet,**
    - **dass** das optische Ablenkelement eine eine Reflektionsfläche (24) aufweisende reflektive Komponente (18) und eine transmissive Komponente (20) aufweist und
    - **dass** das optische Ablenkelement zur Höhenwinkeländerung durch Kippen um die Kippachse (28) innerhalb eines ersten Kippwinkelbereichs in einem ersten Modus, in dem der Lichtstrahl durch Hindurchtreten durch die transmissive Komponente (20) des optischen Ablenkelements ablenkbar ist, und innerhalb eines zweiten Kippwinkelbereichs in einem zweiten Modus betreibbar ist, in dem der Lichtstrahl durch Reflektion an der reflektiven Komponente (18) des optischen Ablenkelements ablenkbar ist.

2.  Nachführvorrichtung nach Anspruch 1, **dadurch gekennzeichnet, dass** die Reflektionsfläche (24) der reflektiven Komponente (18) eine Außerifläche des optischen Ablenkelements bildet und dass die transmissive Komponente (20) eine Lichteinfallsfläche (26) sowie eine Lichtaustrittsfläche (27) aufweist, die beide ebenfalls Außenflächen des optischen Ablenkelements bilden.

3.  Nachführvorrichtung nach Anspruch 1 oder 2, **dadurch gekennzeichnet, dass** die transmissive Komponente (20) des optischen Ablenkelements eine interne Totalreflektionsfläche (24) aufweist, die entlang eines durch die transmissive Komponente (20) verlaufenden Strahlengangs zwischen der Lichteinfallsfläche (26) und der Lichtaustrittsfläche (27) angeordnet ist, und dass die interne Totalreflektionsfläche (24) mit der Reflektionsfläche (24) der reflektiven Komponente (18) zusammenfällt.

4.  Nachführvorrichtung nach einem der Ansprüche 1 bis 3, **dadurch gekennzeichnet, dass** die reflektive Komponente (18) einen Reflektorkörper mit einer Spiegelfläche (21) auf einer ersten Seite und eine dieser Spiegelfläche (21) abgewandte zweite Seite aufweist und dass an der zweiten Seite die transmissive Komponente (20) angeordnet ist.

5.  Nachführvorrichtung nach einem der Ansprüche 1 bis 4, **dadurch gekennzeichnet, dass** die transmissive Komponente (20) als optischer Prismenkörper (22) mit einer Grundfläche (24) und zwei von dieser aufragenden, gegeneinander geneigten, schrägen Seitenflächen (26,27) als Lichteinfalls- und Lichtaustrittsflächen ausgebildet ist.

6.  Nachführvorrichtung nach Anspruch 4 und 5, **dadurch gekennzeichnet, dass** die Grundfläche (24) des Prismenkörpers (22) auf der zweiten Seite des Reflektorkörpers angeordnet ist.

7.  Nachführvorrichtung nach Anspruch 5 oder 6, **dadurch gekennzeichnet, dass** der Prismenkörper (22) eine von außen verspiegelte Grundfläche (24) aufweist und dass die verspiegelte Grundfläche (24) die Reflektionsfläche (21) der reflektiven Komponente (18) ist.

8.  Nachführvorrichtung nach einem der Ansprüche 5 bis 7, **dadurch gekennzeichnet, dass** der Prismenkörper (22) einen dreieckigen oder trapezförmigen Querschnitt aufweist und/oder dass die beiden schrägen Seitenflächen (26,27) des Prismenkörpers (22) rechtwinkelig zueinander verlaufen.

9. Nachführvorrichtung nach einem der Ansprüche 1 bis 8, **dadurch gekennzeichnet, dass** die Kippachse (28) innerhalb der reflektiven Komponente (18) und/oder der transmissiven Komponente (20) oder zwischen diesen oder innerhalb der Reflektionsfläche (21) oder tangential zur Reflektionsfläche (21) der reflektiven Komponente (18) angeordnet ist.

10. Nachführvorrichtung nach einem der Ansprüche 1 bis 9, **dadurch gekennzeichnet, dass** die Kippachse (28) in Abhängigkeit von der Größe des Kippwinkels, insbesondere innerhalb des ersten Kippwinkelbereichs, unter Beibehaltung ihrer Ausrichtung seitlich versetzbar ist.

11. Nachführvorrichtung nach einem der Ansprüche 1 bis 10, **dadurch gekennzeichnet, dass** die beiden Kippwinkelbereiche aneinandergrenzen und sich teilweise überlappen.

12. Nachführvorrichtung nach einem der Ansprüche 1 bis 11, **dadurch gekennzeichnet, dass** das optische Ablenkelement innerhalb oder unterhalb eines transparenten Abdeckelements angeordnet ist.

13. Nachführvorrichtung nach einem der Ansprüche 1 bis 12, **dadurch gekennzeichnet, dass** Lichteintritts und/oder Austrittsflächen(26,27) der transmissiven Komponente (20) des optischen Ablenkelements (16) mit einer Antireflexionsbeschichtung versehen sind.

14. Nachführvorrichtung nach einem der Ansprüche 1 bis 13, **dadurch gekennzeichnet, dass** die transmissive Komponente (20) des optischen Ablenkelements (16) eine Lichteinfallsfläche (26) und eine Lichtaustrittsfläche (27) aufweist, die zur Minimierung der Auswirkungen von Rückreflektionen von auf die Lichteinfallsfläche (26) auftreffender Strahlung und/oder von durch die Lichtaustrittsfläche (27) austretender Strahlung zur Kippachse (28) gegensinnig geneigt und jeweils in einem spitzen Winkel zur Kippachse (28) verlaufen, wobei Reflektionsstrahlung zur Seite reflektiert wird.

15. Nachführvorrichtung nach Anspruch 14, **dadurch gekennzeichnet, dass** der jeweilige spitze Neigungswinkel zwischen einigen wenigen 1/10 Winkelgrad bis einige wenige zig Winkelgrade, vornehmlich zwischen 0,1 Winkelgrad bis 15 Winkelgrad und insbesondere zwischen 2 Winkelgrad bis 5 Winkelgrad beträgt.

## Claims

1. A tracking device for a modulated data communication light beam, comprising:

   - a transmitter for transmitting a light beam and a receiver for receiving a light beam or a transmitter/receiver unit adapted to be switched selectively or to transmit and receive simultaneously, and
   - an optical tracking unit defining an optical axis (12) that either starts from the transmitter or leads to the receiver, and comprising an optical deflection element arranged along said axis, which element is tiltable relative to the transmitter and/or receiver and or the transmitter/receiver unit about a tilt axis (28) extending perpendicularly to the optical axis (12), for changing the elevation angle under which the light beam enters or exits, and which element is rotatable about a rotation axis (30) that is parallel to the optical axis (12), either together with the transmitter and/or the receiver and/or the transmitter/receiver unit or relative to the transmitter and/or the receiver and/or the transmitter/receiver unit, for changing the azimuth angle under which the light beam enters or exits, **characterized in**
   - **that** the optical deflection element has a reflective component (18) with a reflection surface (24) and a transmissive component (20), and
   - **that**, for changing the elevation angle by tilting the tilt axis (28), the optical deflection element is adapted to be operated in a first mode in a first tilt angle range, in which mode the light beam can be deflected by passing through the transmissive component (20) of the optical deflecting element, and to be operated in a second mode in a second tilt angle range, in which mode the light beam can be deflected by reflection from the reflective component (18) of the optical deflection element.
   t

2. The tracking device of claim 1, **characterized in that** the reflection surface (24) of the reflective component (18) forms an outer surface of the optical deflection element, and that the transmissive component (20) has a light incidence surface (26) and a light emitting surface (27) which both also form outer surfaces of the optical deflection element.

3.  The tracking device of claim 1 or 2, **characterized in that** the transmissive component (20) of the optical deflection element comprises an internal total reflection surface (24) arranged along a beam path extending through the transmissive component (20) between the light incidence surface (26) and the light emitting surface (27), and that the internal total reflection surface (24) coincides with the reflection surface (24) of the reflective component (18).

4.  The tracking device of one f claims 1 to 3, **characterized in that** the reflective component (18) has a reflector body with a mirror surface (21) on a first side and a second side averted from this mirror surface (21), and that the transmissive component (20) is arranged on this second side.

5.  The tracking device of one of claims 1 to 4, **characterized in that** the transmissive component (20) is in the form of an optical prism body (22) with a base surface (24) and two slanted side surfaces (26, 27) as the light incident and light emitting surfaces, the side surfaces protruding from the base surface and being inclined towards each other.

6.  The tracking device of claim 4 and 5, **characterized in that** the base surface (24) of the prism body (22) is arranged on the second side of the reflector body.

7.  The tracking device of claim 5 or 6, **characterized in that** the prism body (22) has a base surface (24) mirrored on the outer side, and that the mirrored base surface (24) is the reflection surface (21) of the reflective component (18).

8.  The tracking device of one of claims 5 to 7, **characterized in that** the prism body (22) has a triangular or trapezoidal cross section and/or that the two slanted side surfaces (26, 27) of the prism body (22) extend at right angles relative to each other.

9.  The tracking device of one of claims 1 to 8, **characterized in that** the tilt axis (28) is arranged within the reflective component (18) and/or the transmissive component (20) or between these or within the reflection surface (21) or tangentially to the reflection surface (21) of the reflective component (18).

10. The tracking device of one of claims 1 to 9, **characterized in that** the tilt axis (28) can be shifted laterally in dependence of the magnitude of the tilt angle, in particular within the first tilt angle range, while maintaining its orientation.

11. The tracking device of one of claims 1 to 10, **characterized in that** the two tilt angle ranges are contiguous and partly overlap each other.

12. The tracking device of one of claims 1 to 11, **characterized in that** the optical deflection element is arranged in or below a transparent cover element.

13. The tracking device of one of claims 1 to 12, **characterized in that** the light incidence and/or light emitting surfaces (26, 27) of the transmissive component (20) of the optical deflecting element (16) are provided with an anti-reflection coating.

14. The tracking device of one of claims 1 to 13, **characterized in that** the transmissive component (20) of the optical deflection element has a light incidence surface (26) and a light emitting surface (27), which, for the purpose of minimizing the effects of back reflections of radiation incident on the light incidence surface (26) and/or of radiation emitted from the light emitting surface (27), are inclined in opposite directions towards the tilt axis (28) and each extend under an acute angle with respect to the tilt axis (28), with reflected radiation being reflected to the side.

15. The tracking device of claim 14, **characterized in that** the respective acute inclination angle is between a few 1/10 of an angular degree to a few tens of angular degrees, preferably between 0.1 angular degrees to 15 angular degrees and in particular between 2 angular degrees and 5 angular degrees.

**Revendications**

1. Système suiveur pour un faisceau lumineux modulé de communication de données, comprenant

   - un émetteur pour émettre un faisceau lumineux et un récepteur pour recevoir un faisceau lumineux ou une unité d'émission et de réception apte à pouvoir être commutée ou à émettre et à recevoir simultanément, et
   - une unité suiveuse optique définissant un axe optique (12) partant de l'émetteur ou allant vers le récepteur et un organe déflecteur optique disposé le long de celui-ci, lequel est apte à être basculé par rapport à l'émetteur et/ou au récepteur et/ou à l'unité d'émission et de réception autour d'un axe de basculement (28) perpendiculaire à l'axe optique (12), pour un changement de l'angle d'élévation sous lequel le faisceau lumineux est reçu ou émis, et lequel est apte à être pivoté ensemble avec l'émetteur et/ou le récepteur et/ou l'unité d'émission et de réception ou par rapport à l'émetteur et/ou au récepteur et/ou à l'unité d'émission et de réception autour d'un axe de pivotement (30) parallèle à l'axe optique (12), pour un changement de l'angle latéral,
   **caractérisé en ce que**
   - l'organe déflecteur optique comprend une composante réfléchissante (18) comportant une surface réfléchissante (24) et une composante transmissive (20) et que,
   - pour un changement de l'angle d'élévation, l'organe déflecteur optique est apte à être fait fonctionner selon un premier mode, selon lequel le faisceau lumineux est apte à être défléchi par pénétration à travers la composante transmissive (20) de l'organe déflecteur optique, par basculement autour de l'axe de basculement (28) dans une première plage d'angles de basculement, et selon un second mode, selon lequel le faisceau lumineux est apte à être défléchi par réflexion sur la composante réfléchissante (18) de l'organe déflecteur optique, dans une seconde plage d'angles de basculement.

2. Système suiveur selon la revendication 1, **caractérisé en ce que** la surface réfléchissante (24) de la composante réfléchissante (18) forme une surface extérieure de l'organe déflecteur optique et **en ce que** la composante transmissive (20) comprend une surface d'incidence de lumière (26) et une surface de sortie de lumière (27) qui forment tous les deux également des surfaces extérieures de l'organe déflecteur optique.

3. Système suiveur selon la revendication 1 ou 2, **caractérisé en ce que** la composante transmissive (20) de l'organe déflecteur comprend une surface interne de réflexion totale (24) qui est disposée, le long d'un chemin de faisceau passant par la composante transmissive (20), entre la surface d'incidence de lumière (26) et la surface de sortie de lumière (27) et **en ce que** la surface interne de réflexion totale (24) coïncide avec la surface de réflexion (24) de la composante réfléchissante (18).

4. Système suiveur selon l'une des revendications 1 à 3, **caractérisé en ce que** la composante réfléchissante (18) comprend un corps réflecteur avec une surface de miroir (21) sur un premier côté et avec un deuxième côté opposé à cette surface de miroir (21) et **en ce que** sur ce deuxième côté est disposé la composante transmissive (20).

5. Système suiveur selon l'une des revendications 1 à 4, **caractérisé en ce que** la composante transmissive (20) est formée comme un corps optique de prisme (22) avec une surface de base (24) et avec deux faces latérales inclinées (26, 27) s'élevant sur ladite base et étant inclinées l'une vers l'autre, comme faces d'incidence de lumière et de sortie de lumière.

6. Système suiveur selon la revendication 4 ou 5, **caractérisé en ce que** la surface de base (24) du corps de prisme (22) est disposée sur le deuxième côté du corps réflecteur.

7. Système suiveur selon la revendication 5 ou 6, **caractérisé en ce que** le corps de prisme (22) comprend une surface de base (24) rendue réfléchissante et **en ce que** la surface de base (24) rendue réfléchissante est la surface réfléchissante (21) de la composante réfléchissante (18).

8. Système suiveur selon l'une des revendications 5 à 7, **caractérisé en ce que** le corps de prisme (22) présente une section triangulaire ou trapézoïdale et/ou **en ce que** les deux surfaces latérales inclinées (26, 27) du corps de prisme (22) sont perpendiculaires l'une à l'autre.

9. Système suiveur selon l'une des revendications 1 à 8, **caractérisé en ce que** l'axe de basculement (28) est disposé à l'intérieur de la composante réfléchissante (18) et/ou la composante transmissive (20) ou entre celles-ci ou à l'intérieur de la surface réfléchissante (21) ou de manière tangentielle par rapport à la surface réfléchissante (21) de la composante réfléchissante (18).

**10.** Système suiveur selon l'une des revendications 1 à 9, **caractérisé en ce que** l'axe de basculement (28) est apte à être décalé latéralement en fonction de l'envergure de l'angle de basculement, notamment à l'intérieur de la première plage d'angles de basculement, tout en conservant son orientation.

**11.** Système suiveur selon l'une des revendications 1 à 10, **caractérisé en ce que** les deux plages d'angles de basculement sont adjacents l'un de l'autre et se chevauchent partiellement.

**12.** Système suiveur selon l'une des revendications 1 à 11, **caractérisé en ce que** l'organe déflecteur optique est disposé à l'intérieur ou en dessous d'un élément de couverture transparent.

**13.** Système suiveur selon l'une des revendications 1 à 12, **caractérisé en ce que** les surfaces d'incidence de lumière et/ou de sortie de lumière (26, 27) de la composante transmissive (20) de l'organe déflecteur optique (16) sont pourvues d'un revêtement anti-réflexion.

**14.** Système suiveur selon l'une des revendications 1 à 13, **caractérisé en ce que** la composante transmissive (20) de l'organe déflecteur optique comprend une surface d'incidence de lumière (26) et une surface de sortie de lumière (27) qui, pour minimiser les effets d'une rétro-réflexion d'un rayonnement incident sur la surface d'incidence de lumière (26) et /ou d'un rayonnement sortant à travers la surface de sortie de lumière (27), sont inclinées inversement par rapport à l'axe de basculement (28) et s'étendent sous un angle aigu par rapport à l'axe de basculement (28), le rayonnement de réflexion étant réfléchi vers le côté.

**15.** Système suiveur selon la revendication 14, **caractérisé en ce que** l'angle d'inclinaison aigu respectif est de quelques peu de dixièmes de degrés d'angle à quelques peu de dizaines de degrés d'angle, de préférence entre 0,1 degré d'angle et 15 degré d'angle, et notamment entre 2 degré d'angle à 5 degré d'angle.

**Fig.1**

**Fig.2**

**Fig.3**

**Fig.4**

**Fig.5**

**Fig.6**

**Fig.7**

**Fig.8**

**Fig.9**

**Fig.10**

**Fig.11**

**Fig.12**

**Fig.13**

**Fig.14**

56  50                    54        52

**Fig.15**

50

52

**Fig.16**

Fig.17

Fig.18

Fig.19

Fig.20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 911914 A
- US 3868169 A
- DE 2300466 A
- US 5134519 A
- DE 3829708 A
- US 2998529 A